# EUROPEAN PATENT APPLICATION

(11) **EP 4 607 637 A2**
(43) Date of publication of application: **27.08.2025**
(21) Application number: 25158923.0
(22) Date of filing: 19.02.2025
(51) Int. Cl.: H01M 10/04, H01M 10/0585, H01M 50/102, H01M 50/121

(54) **RECHARGEABLE BATTERY**

(30) Priority: 20.02.2024 KR 20240024458
(71) Applicant: SAMSUNG SDI CO., LTD., Yongin-si, Gyeonggi-do 17084 (KR)
(72) Inventor: CHOI, Bumkuk, 17084 Yongin-si (KR); JANG, Minyoung, 17084 Yongin-si (KR); CHO, Hyun, 17084 Yongin-si (KR)
(74) Representative: Marks & Clerk LLP

(57) **Abstract**

A rechargeable battery of the present disclosure includes an electrode assembly comprising a plurality of electrodes stacked together and having a separator disposed between respective ones of the plurality of electrodes, and an adhesive member disposed at at least two of corner parts of the electrode assembly and attached to cover an upper surface, side surface, and lower surface of the electrode assembly.

## Description

### FIELD

The present disclosure relates to a rechargeable battery.

### BACKGROUND

A rechargeable battery may be manufactured in various shapes, such as a pouch battery which may include an electrode assembly including an insulating separator interposed between a positive electrode plate and a negative electrode plate, and a thin, flexible pouch in which the electrode assembly is embedded. In some embodiments, the pouch accommodates the electrode assembly in the inner space.

### SUMMARY

The present disclosure is intended to overcome the problems described herein with existing batteries, and provides a rechargeable battery capable of minimizing the leakage of adhesive material from a protective tape.

Effects that may be obtained from the present disclosure will not be limited to only the above described effects. In addition, other effects which are not described herein will become apparent to those skilled in the art from the following description.

A rechargeable battery according to an embodiment of the present disclosure for solving the above technical object includes an electrode assembly comprising a plurality of electrodes stacked together and having a separator disposed between respective ones of the plurality of electrodes, and an adhesive member disposed at at least two of corner parts of the electrode assembly and attached to cover an upper surface, side surface, and lower surface of the electrode assembly.

The adhesive member may have a ribbon shape.

The adhesive member may have a closed curve shape.

At least a part of the adhesive member may have an arc shape.

At least a part of the adhesive member may have a bent shape.

Parts of the adhesive member may be separated from each other.

The adhesive member may be disposed at each corner part of the electrode assembly.

The adhesive member may include a base part attached to at least one corner part of the electrode assembly, a first extension part extending from each of left and right sides of the base part and attached to a circumference surface of the electrode assembly, and a second extension part extending from each of upper and lower sides of the first extension part and attached to each of the upper and lower surfaces of the electrode assembly.

The at least one corner part of the electrode assembly may be rounded, and the base part may have a shape corresponding to the at least one corner part of the electrode assembly.

The second extension part may have a semicircular shape.

The second extension part may have a triangle shape.

The second extension part may comprise a pair of second extension parts disposed on the upper side of the first extension part, and the pair of second extension parts may be disposed to be spaced apart so as not to interfere with each other while attached to the electrode assembly.

The second extension part may comprise a pair of second extension parts disposed on the lower side of the first extension part, and the pair of second extension parts may be disposed to be spaced apart so as not to interfere with each other while attached to the electrode assembly.

The base part, the first extension part, and the second extension part may be integrated into one body.

The adhesive member may further include a first fold line that is pressed to a certain depth along a boundary between the base part and the first extension part.

The adhesive member may further include a second fold line that is pressed to a certain depth along a boundary between the first extension part and the second extension part.

The adhesive member may be a biaxially oriented polyethylene terephthalate (BoPET) film.

An adhesive layer may be on one surface of the adhesive member.

The adhesive layer may be disposed on an inner portion excluding an edge of the adhesive member.

A gap from the edge of the adhesive member to the adhesive layer may be within the range of 0.5 mm to 1.5 mm.

At least some of the above and other features of the invention are set out in the claims.

According to the present disclosure, the rechargeable battery includes an adhesive member, and the adhesive member is not attached to edges disposed at the front, rear, and left and right sides of the electrode assembly, but is attached to a corner part of the electrode assembly, which is a point where edges of the electrode assembly are connected. Accordingly, even if the size of the electrode assembly increases due to an increase in the capacity of the rechargeable battery, unlike conventional rechargeable batteries, the process of attaching the adhesive member may be performed more easily.

In addition, even if the adhesive member is pressed by an external force during the process of manufacturing the rechargeable battery, the adhesive material included in the adhesive layer may be prevented from coming out of the adhesive member.

Accordingly, contamination by adhesive material on the outer surface of the electrode assembly may be prevented. Accordingly, the outermost electrode plate may be prevented from being damaged by contaminants.

In addition, by attaching the adhesive member to the corner part of the electrode assembly, it is possible to improve electrolyte solution impregnation performance, and strengthen the adhesion between the upper and lower parts of the electrode assembly to ensure the thickness balance of the electrode assembly. Additionally, it is possible to improve the manufacturing quality of the rechargeable battery by aligning the positions of a first electrode, separator, and a second electrode.

### BRIEF DESCRIPTION OF THE DRAWINGS

The accompanying drawings illustrate preferred embodiments of the present disclosure and, together with the foregoing disclosure, serve to provide further understanding of the technical features of the present disclosure. However, the present disclosure is not to be construed as being limited to the drawings.
FIG. 1 is a perspective view illustrating a rechargeable battery according to an embodiment of the present disclosure.
FIG. 2 is a top plan view of the rechargeable battery of FIG. 1 viewed from above.
FIG. 3 is a bottom view of the rechargeable battery of FIG. 1 viewed from below.
FIG. 4 is a developed diagram of an adhesive member extracted from the rechargeable battery of FIG. 1.
FIGS. 5 and 6 are developed diagrams of adhesive members of various shapes.
FIGS. 7 is a developed diagram of an adhesive member according to a modified example.
FIG. 8 is a perspective view illustrating an electrode assembly to which the adhesive member of FIG. 7 is attached.
FIG. 9 is a developed diagram illustrating an adhesive member including a semicircular second extension part.
FIG. 10 is a bottom view of the adhesive member of FIG. 9 viewed from below.
FIG. 11 is a perspective view illustrating the electrode assembly to which the adhesive member of FIG. 9 is attached.

### DETAILED DESCRIPTION OF THE EMBODIMENTS

Hereinafter, preferred embodiments of the present disclosure will be described in detail with reference to the accompanying drawings. Hereinafter, an embodiment of the present invention will be described in detail with reference to the accompanying drawings. Prior to making the description, the terms or words used in the specification and claims of the present invention are not interpreted using typical or dictionary limited meanings, and are constructed as meanings and concepts conforming to the technical features of the present invention based on the principle that the inventors can appropriately define the concepts of the terms to explain the present invention in the best manner. Accordingly, it is to be understood that the detailed description, which will be disclosed along with the accompanying drawings, is intended to describe the embodiments of the present invention and is not intended to represent all technical ideas of the present invention. Therefore, it should be understood that various equivalents and modifications can exist which can replace the embodiments described in the time of the application.

It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

In addition, for ease of understanding of the present disclosure, the accompanying drawings are not drawn to real scale, but the dimensions of some components may be exaggerated. In addition, the same reference numbers may be assigned to the same components in different embodiments.

Stating that two objects of comparison are 'the same' means that they are 'substantially the same'. Therefore, substantially identical may include a deviation that is considered low in the art, for example, a deviation of less than 5%. Additionally, uniformity of a parameter in a certain region may mean uniformity from an average perspective.

Although terms of "first," "second," and the like are used to explain various constituent elements, the constituent elements are not limited to such terms. These terms are only used to distinguish one constituent element from another constituent element. Unless explicitly described to the contrary, the second constituent element may be referred to as the first constituent element.

Throughout the specification, unless otherwise stated, each component may be singular or plural.

It will also be understood that when a first element or layer is referred to as being present "on" or "beneath" a second element or layer, the first element may be disposed directly on or beneath the second element or may be disposed indirectly on or beneath the second element with a third element or layer being disposed between the first and second elements or layers.

It should be noted that if it is described in the specification that one component is "connected," or "coupled" on another component, a third component may be "connected," "coupled," and "joined" between the first and second components, although the first component may be directly connected, coupled, or joined to the second component.

As used herein, the term "and/or" includes any one and all combinations of one or more of the associated listed items. Additionally, the use of "may" when describing embodiments of the present disclosure relates to "one or more embodiments of the present disclosure."

Expressions such as "one or more" and "at least" preceding a list of elements modify the entire list of elements and do not modify individual elements in the list.

When referring to "A and/or B" throughout the specification, it means A, B, or A and B, unless specifically stated to the contrary. When referring to "C to D", it means that it is greater than or equal to C and less than or equal to D, unless otherwise specified.

When the phrases such as "at least one of A, B, and C," "at least one of A, B or C," "at least one selected from the group of A, B, and C," and "at least one selected from A, B, and C" are used to specify a list of elements A, B, and C, the phrases may refer to any suitable combination.

The term "use" may be considered synonymous with the term "utilize."

As used herein, the terms "substantially," "about," and similar terms are used as terms of approximation and are intended to account for inherent variations in the measured or calculated values that would be recognized by a person of ordinary skill in the art.

It will be understood that, although the terms first, second, third, etc., may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of the present embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "on" or "above" the other elements or features. Thus, the exemplary term "below" can encompass both an orientation of above and below.

The terminology used herein is for the purpose of describing particular embodiments only and is not intended to be limiting of the disclosure.

Hereinafter, a rechargeable battery according to embodiments of the present disclosure will be described in detail with reference to the drawings.

Electrode assemblies of rechargeable batteries are largely divided into winding type and stacking type depending on their structure. The stacking type has good structural safety and excellent space utilization, so the stacking type is widely used in small and medium-to-large size batteries. A stacking type of secondary battery is a stack of multiple electrodes and separators.

In the manufacturing process of such rechargeable batteries, protective tapes are generally attached to the edges of the electrode assembly after stacking the positive electrode plate, separator, and negative electrode plate. The protective tape is attached by an attachment jig.

Meanwhile, as the capacity of rechargeable batteries has recently increased, there is a problem in that it is not easy to attach a protective tape to the edge of the electrode assembly.

Then, the attachment jig presses the outer surface of the protective tape during the process of attaching the protective tape. At this time, some of the adhesive material included in the adhesive surface of the protective tape may come out of the protective tape due to external pressure. The adhesive substances may contaminate the attachment jig and also contaminate the electrode plate in contact with the attachment jig. Accordingly, there is a problem that the electrode plate is damaged by contaminants.

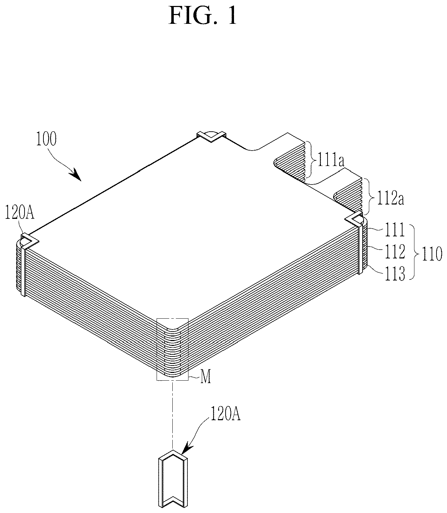

FIG. 1 is a perspective view illustrating a rechargeable battery according to an embodiment of the present disclosure.

Referring to FIG. 1, a rechargeable battery 100 according to an embodiment of the present disclosure may include an electrode assembly 110, an adhesive member 120A, and a case (not shown).

The electrode assembly 110 includes a plurality of electrodes 111 and 112 and a separator 113. In more detail, the plurality of electrodes 111 and 112 may include a first electrode 111 and a second electrode 112. The first electrode 111 may include a first electrode substrate tab 111 a, and the second electrode 112 may include a second electrode substrate tab 112a. Additionally, the first electrode substrate tabs 111a may be connected to each other, and the second electrode substrate tabs 112a may be connected to each other.

The electrode assembly 110 includes a plurality of electrodes 111 and 112 stacked together with a separator 113 therebetween (e.g., between respective ones of the plurality of electrodes). To be more specific, the electrode assembly 110 may be in the form of a stack including the first electrode 111, the second electrode 112, and the separator 113 repeatedly stacked. For example, the electrode assembly 110 may be a stacked type in which electrodes are arranged to be stacked in multiple layers.

Meanwhile, in the plurality of electrodes 111 and 112, the first electrode 111 may be a negative electrode and the second electrode 112 may be a positive electrode, but also vice versa in other embodiments.

The separator 113 may be interposed between the first electrode 111 and the second electrode 112. The separator 113 prevents shorting between the first electrode 111 and the second electrode 112, and enables the movement of lithium ions. To this end, the separator 113 may be relatively larger in size than the electrode current collector.

The material of the separator 113 may be, for example, polyethylene, polypropylene, or a composite film of polyethylene and polypropylene, but is not limited thereto.

Such a separator 113 may be cut into unit lengths and disposed between the first electrode 111 and the second electrode 112. Alternatively, a single separator 113 (e.g., in a ribbon shape) may be disposed between the first electrode 111 and the second electrode 112 (e.g., in a zigzag shape). Alternatively, the separator 113 may be installed to be wound in one direction between the first electrode 111 and the second electrode 112.

As such, the arrangement form of the separator 113 is not limited to a specific form, but in this embodiment, it is described that the separator 113 is cut into unit length and disposed between the first electrode 111 and the second electrode 112.

The adhesive member 120A prevents the first electrode 111, the second electrode 112, and the separator 113 from being separated from each other in the stacked electrode assembly 110. The adhesive member 120A for this purpose is disposed at at least two of the corner parts M of the electrode assembly 110 and attached to cover the upper surface, side surface, and lower surface of the electrode assembly 110. A detailed description of the adhesive member 120A for this purpose will be described herein.

A case (not shown) may accommodate the electrode assembly 110. The electrode assembly 110 described above is accommodated in the case together with an electrolyte solution. The above case may be one of a pouch type, a cylindrical type, or a square type. Since the case may be included in a general rechargeable battery 100, detailed description of the case will be omitted.

Hereinafter, the above-described adhesive member 120A will be described in more detail with reference to the drawings.

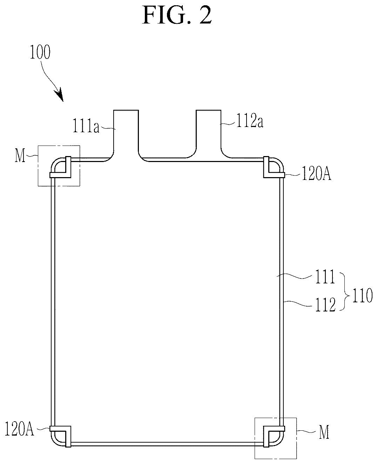

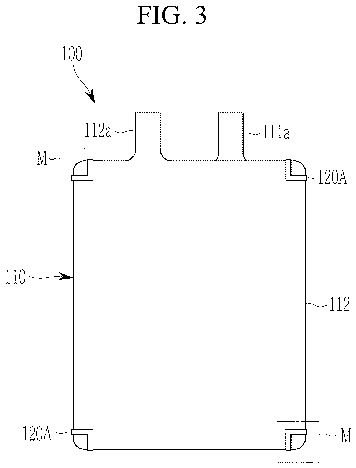

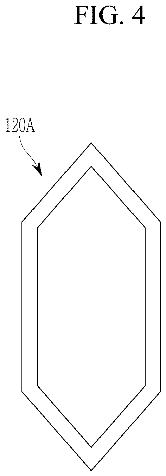

FIG. 2 is a top plan view of the rechargeable battery of FIG. 1 viewed from above, FIG. 3 is a bottom view of the rechargeable battery of FIG. 1 viewed from below, and FIG. 4 is a developed diagram of an adhesive member extracted from the rechargeable battery of FIG. 1.

Referring to FIGS. 2 to 4, the adhesive member 120A may be attached to each corner part M of the electrode assembly 110. The electrode assembly 110 may be hexahedral and may include four corner parts M. In some embodiments, there may be four adhesive members 120A.

Alternatively, there may be two adhesive members 120A, and each of the two adhesive members 120A may be disposed on the left and right sides of the electrode assembly 110, respectively. However, it may be more advantageous to have four adhesive members 120A and to attach the four adhesive members 120A to all four corner parts M of the electrode assembly 110 in maintaining a stable assembled state of the electrode assembly 110.

Meanwhile, the shape of the adhesive member 120A to prevent the first electrode 111, the second electrode 112, and the separator 113 of the electrode assembly 110 from being separated from each other may be, for example, a closed curve shape. However, so that the adhesive member 120A may be smoothly attached to the corner part M of the electrode assembly 110, a part of the adhesive member 120A may have a bent shape.

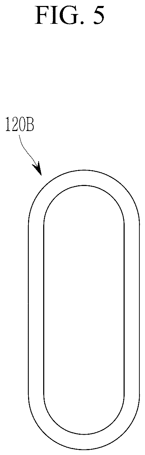

Referring to FIG. 5, at least a part of an adhesive member 120B may have an arc shape. The arc-shaped part of the adhesive member 120B may be attached to the upper and/or lower surface of the electrode assembly 110.

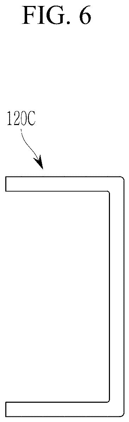

Alternatively, referring to FIG. 6, an adhesive member 120C may have a ribbon shape. At this time, parts of the adhesive member 120C may be separated from each other. That is, the adhesive member 120C may have a partially cut shape rather than a closed curve.

The adhesive member 120C may have a shape in which at least a part of the adhesive member 120C is bent. For example, the adhesive member 120C may have a shape that combines two members, each in the shape of the letter 'L'.

Referring back to FIG. 1, even if the size of the electrode assembly 110 is increased due to the increased capacity of the secondary battery 100, the adhesive member 120A is attached to the sharp corner part M, where the edges of the electrode assembly are connected to each other, rather than the edges disposed at the front and back and left and right sides of the electrode assembly 110 based on the direction shown in the drawing. Accordingly, unlike conventional rechargeable batteries, the adhesive member 120A may be more easily attached to the electrode assembly 110.

In addition, because the size of the adhesive member 120A is significantly smaller than the protective tape used in conventional rechargeable batteries, the adhesive material for adhesion may be minimized from flowing out from the outside due to the pressure of the attachment jig and contaminating the attachment jig or electrode plate.

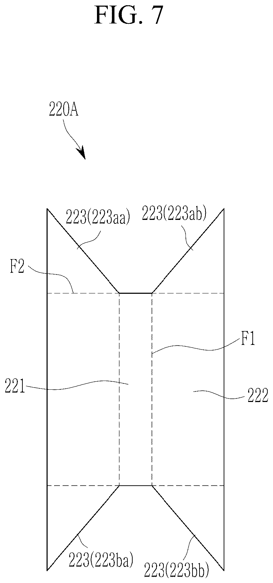

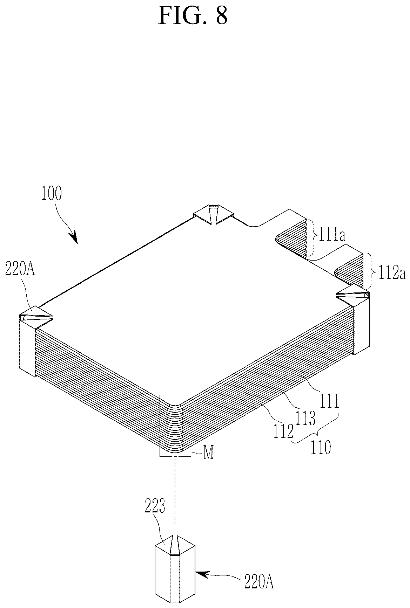

FIG. 7 is a developed diagram of an adhesive member according to a modified example, and FIG. 8 is a perspective view illustrating an electrode assembly to which the adhesive member of FIG. 7 is attached.

Referring to FIGS. 7 and 8, the adhesive member 220A according to the modified example includes, for example, a base part 221, a first extension part 222, and a second extension part 223.

The base part 221 is attached to the corner part M of the electrode assembly 110. The corner part M of the electrode assembly 110 may be rounded. The base part 221 may have a shape corresponding to the corner part M of the electrode assembly 110. The shape of the base part 221 for this may be, for example, a square.

The first extension part 222 extends from each of the left and right sides of the base part 221 and is attached to a circumference surface of the electrode assembly 110. The shape of the first extension part 222 may also be square like the shape of the base part 221. The first extension part 222 may be attached to the left and right sides or the front and back sides of the electrode assembly 110.

The second extension part 223 extends from each of the upper and lower sides of the first extension part 222 and is attached to each of the upper and lower surfaces of the electrode assembly 110, respectively. The base part 221, the first extension part 222, and the second extension part 223 as described above may be formed integrally.

For example, the second extension part 223 may have a triangular shape.

As shown in FIG. 7, the specific shape of the second extension part 223 of the triangle may be such that the gap between two adjacent second extension parts 223aa and 223ab gradually increases as the distance from the first extension part 222 increases.

This may be to prevent the second extension parts 223 from overlapping each other after the adhesive member 220A is attached to the electrode assembly 110.

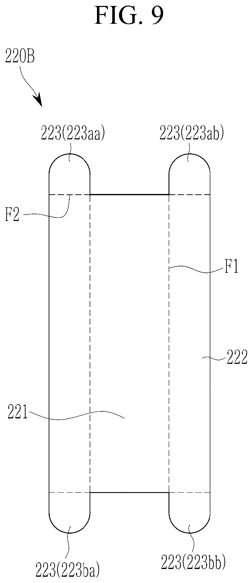

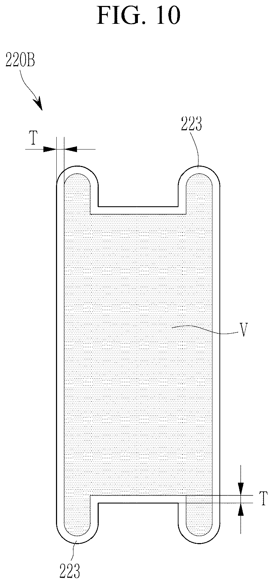

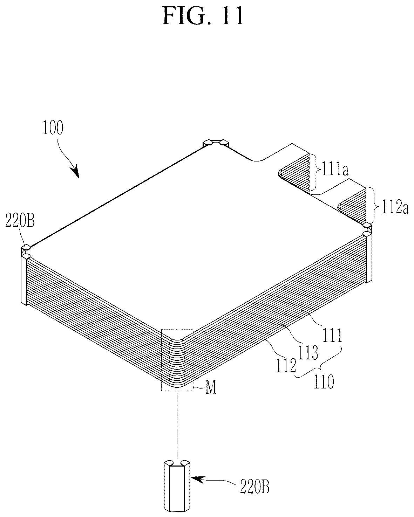

FIG. 9 is a developed diagram illustrating an adhesive member including a semicircular second extension part, and FIG. 10 is a bottom view of the adhesive member of FIG. 9 viewed from below. FIG. 11 is a perspective view illustrating the electrode assembly to which the adhesive member of FIG. 9 is attached.

Referring to FIGS. 9 and 10, the second extension part 223 may also have a semicircular shape.

To describe the second extension part 223 in more detail, the second extension part may comprise a pair of second extension parts 223aa and 223bb. The two second extension parts 223aa and 223ab may be disposed on the upper side of the first extension part 222. At this time, the two second extension parts 223aa and 223ab may be disposed to be spaced apart so as not to interfere with each other while attached to the electrode assembly 110.

Further, two second extension parts 223ba and 223bb may be disposed on the lower side of the first extension part 222. At this time, the two second extension parts 223ba and 223bb may be disposed to be spaced apart so as not to interfere with each other while attached to the electrode assembly 110.

As described above, a total of four second extension parts 223aa, 223ab, 223ba, and 223bb are attached to the upper and lower sides of the electrode assembly 110, respectively, so that the adhesive member 220A may be strongly attached to the electrode assembly 110.

Meanwhile, the adhesive member 220B may further include a first fold line F1.

The first fold line F1 is pressed to a certain depth along the boundary between the base part 221 and the first extension part 222. The first fold line F1 may allow the first extension part 222 to be stably folded with respect to the base part 221 during the process of attaching the adhesive member 220B.

Meanwhile, the adhesive member 220B may further include a second fold line F2.

The second fold line F2 is pressed to a certain depth along the boundary between the first extension part 222 and the second extension part 223. The second fold line F2 may allow the first extension part 222 to be stably folded with respect to the base part 221 during the process of attaching the adhesive member 220B.

Meanwhile, the material of the adhesive member 220B as described above may be, for example, a biaxial oriented polyethylene terephthalate (BoPET) film. BoPET is the best among general-purpose plastic films with high tensile strength and appropriate elongation.

Further, BoPET has a wide usage range of -70 °C to 150 °C, has very little dimensional change due to heat, has excellent electrical insulation, and is impermeable to general chemicals except strong alkalis. In addition, BoPET has very high moisture and water resistance, high transparency, a flat surface, and excellent glossiness.

If the adhesive member 220B is made of a biaxially oriented polyethylene terephthalate film, high insulation reliability may be achieved. In addition, the adhesive member 220B may have excellent tensile strength, which allows the electrode assembly 110 to maintain stably coupled without being separated by external force.

FIG. 10 is a bottom view of the adhesive member of FIG. 9 viewed from below.

Referring to FIG. 10, there may be an adhesive layer V on one surface of the adhesive member 220B. The adhesive member 220B may be attached to the electrode assembly 110 by the adhesive layer V. The adhesive layer V may be disposed on an inner portion excluding the edge of the adhesive member 220B.

Here, the gap from the edge of the adhesive member 220B to the adhesive layer V may be within the range of 0.5 mm to 1.5 mm.

If a gap T from the edge of the adhesive member 220B to the adhesive layer V is less than 0.5 mm, the adhesive material included in the adhesive layer V may come out when the adhesive layer V is pressed by an external force. If the gap T from the edge of the adhesive member 220B to the adhesive layer V exceeds 1.5 mm, the portion of the edge of the adhesive member 220B that is not in contact with the electrode assembly 110 may become excessively wide and the adhesion may be weakened.

As described above, the adhesive layer V is disposed on the inner portion excluding the edge of the adhesive member 220B, so even if the adhesive member 220B is pressed by an external force during the process of manufacturing the rechargeable battery 100, the adhesive material included in the adhesive layer V may be prevented from coming out of the adhesive member 220B. Accordingly, it is possible to prevent contamination of the outer surface of the electrode assembly 110 by adhesive material.

Accordingly, it is possible to prevent the outermost electrode plate from being damaged by contaminants.
While this disclosure has been described in connection with what is presently considered to be practical embodiments, the drawings and the detailed description of the present disclosure which are described above are merely illustrative, are just used for the purpose of describing the present disclosure, and are not used for qualifying the meaning or limiting the scope of the present disclosure, which is disclosed in the appended claims. Therefore, it will be understood by those skilled in the art that various modifications and other equivalent embodiments may be made from the present disclosure. Accordingly, an actual technical protection scope of the present disclosure is to be defined by the claims.

## Claims

1. A rechargeable battery comprising:
an electrode assembly comprising a plurality of electrodes stacked together and having a separator disposed between respective ones of the plurality of electrodes; and
an adhesive member disposed at at least two of corner parts of the electrode assembly and attached to cover an upper surface, side surface, and lower surface of the electrode assembly.

2. The rechargeable battery as claimed in claim 1, wherein:
(i) the adhesive member has a ribbon shape; or
(ii) the adhesive member has a closed curve shape.

3. The rechargeable battery as claimed in claim 1, wherein at least a part of the adhesive member has an arc shape.

4. The rechargeable battery as claimed in claim 1, wherein at least a part of the adhesive member has a bent shape.

5. The rechargeable battery as claimed in claim 1, wherein parts of the adhesive member are separated from each other.

6. The rechargeable battery as claimed in any one of claims 1 to 5, wherein the adhesive member is disposed at each corner part of the electrode assembly.

7. The rechargeable battery as claimed in claim 1, wherein the adhesive member comprises:
a base part attached to at least one corner part of the electrode assembly;
a first extension part extending from each of left and right sides of the base part and attached to a circumference surface of the electrode assembly; and
a second extension part extending from each of upper and lower sides of the first extension part and attached to each of the upper and lower surfaces of the electrode assembly.

8. The rechargeable battery as claimed in claim 7, wherein:
the at least one corner part of the electrode assembly is rounded; and
the base part has a shape corresponding to the at least one corner part of the electrode assembly.

9. The rechargeable battery as claimed in claim 7 or claim 8, wherein:
(i) the second extension part has a semicircular shape; or
(ii) the second extension part has a triangle shape.

10. The rechargeable battery as claimed in any one of claims 7 to 9, wherein:
(i) the second extension part comprises a pair of second extension parts disposed on the upper side of the first extension part, and the pair of second extension parts are disposed to be spaced apart so as not to interfere with each other while attached to the electrode assembly; and/or
(ii) the second extension part comprises a pair of second extension parts disposed on the lower side of the first extension part,
and the pair of second extension parts are disposed to be spaced apart so as not to interfere with each other while attached to the electrode assembly.

11. The rechargeable battery as claimed in any one of claims 7 to 10, wherein the base part, the first extension part, and the second extension part are integrated into one body.

12. The rechargeable battery as claimed in any one of claims 7 to 11, wherein:
(i) the adhesive member further comprises a first fold line that is pressed to a certain depth along a boundary between the base part and the first extension part; and/or
(ii) the adhesive member further comprises a second fold line that is pressed to a certain depth along a boundary between the first extension part and the second extension part.

13. The rechargeable battery as claimed in any one of claims 1 to 12, wherein the adhesive member is a biaxially oriented polyethylene terephthalate (BoPET) film.

14. The rechargeable battery as claimed in any one of claims 1 to 13, wherein an adhesive layer is on one surface of the adhesive member.

15. The rechargeable battery as claimed in claim 14, wherein the adhesive layer is disposed on an inner portion excluding an edge of the adhesive member, optionally wherein a gap from the edge of the adhesive member to the adhesive layer is within the range of 0.5 mm to 1.5 mm.
